(19) **Europäisches Patentamt**
**European Patent Office**
**Office européen des brevets**

(11) **EP 3 363 615 B1**

(12) **FASCICULE DE BREVET EUROPEEN**

(45) Date de publication et mention
de la délivrance du brevet:
**28.08.2019 Bulletin 2019/35**

(51) Int Cl.:
***B29C 49/68*** *(2006.01)*       ***B29B 13/02*** *(2006.01)*
***B29C 35/02*** *(2006.01)*       ***B29C 49/64*** *(2006.01)*
***B29C 49/12*** *(2006.01)*       *B29C 35/08* *(2006.01)*
*B29C 49/06* *(2006.01)*       *B29K 105/00* *(2006.01)*
*B29L 31/00* *(2006.01)*       *B29K 67/00* *(2006.01)*

(21) Numéro de dépôt: **18166577.9**

(22) Date de dépôt: **04.02.2015**

(54) **UNITE DE TRAITEMENT D'EBAUCHES EQUIPEE D'UNE SECTION DE CONFINEMENT OPTIQUE A PAROIS CONVERGENTES**

**EINHEIT ZUM VERARBEITEN VON VORFORMLINGEN MIT EINEM OPTISCHEN BEGRENZUNGSABSCHNITT MIT KONVERGIERENDEN WÄNDEN**

**UNIT FOR PROCESSING BLANKS PROVIDED WITH AN OPTICAL CONFINEMENT SECTION HAVING CONVERGENT WALLS**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.03.2014 FR 1452296**

(43) Date de publication de la demande:
**22.08.2018 Bulletin 2018/34**

(62) Numéro(s) de document de la (des) demande(s)
initiale(s) en application de l'article 76 CBE:
**15706888.3 / 3 119 582**

(73) Titulaire: **Sidel Participations**
**76930 Octeville-sur-Mer (FR)**

(72) Inventeurs:
• **LAHOGUE, Yoann**
**76930 Octeville-sur-mer (FR)**
• **FEUILLOLEY, Guy**
**76930 Octeville-sur-mer (FR)**

(74) Mandataire: **Grassin d'Alphonse, Emmanuel Jean Marie**
**Sidel Participations**
**Avenue de la Patrouille de France**
**76930 Octeville-sur-mer (FR)**

(56) Documents cités:
**WO-A1-2008/075280     FR-A1- 2 878 185**
**FR-A1- 2 915 418**

**Description**

L'invention a trait à la fabrication de corps creux tels que des récipients, par soufflage ou étirage-soufflage à partir d'ébauches en matière plastique.

Le terme « ébauche » désigne une préforme, obtenue par injection d'une matière plastique dans un moule, ou un corps creux intermédiaire obtenu à partir d'une préforme ayant subi au moins une première opération de formage et destiné à en subir au moins une seconde.

L'invention concerne plus précisément le traitement, par exemple thermique (chauffe) ou de décontamination, des ébauches. Le traitement des ébauches est généralement réalisé au défilé au sein d'une unité de traitement (couramment appelée « four » dans le cas de la chauffe), équipée d'une pluralité de sources de rayonnement électromagnétique devant lesquelles défilent les ébauches entraînées en rotation sur elles-mêmes.

Si la technique classique de chauffe des ébauches au moyen de lampes à incandescence de type halogènes tubulaires rayonnant suivant la loi de Planck sur un spectre continu reste à ce jour la plus répandue, une technologie alternative a récemment vu le jour, basée sur l'utilisation de sources de rayonnement électromagnétique monochromatique ou pseudo-monochromatique (notamment des lasers), dont le spectre d'émission s'étend pour l'essentiel dans le domaine de l'infrarouge (cf. les demandes de brevet français n° FR 2 878 185 et FR 2 915 418 au nom de la demanderesse).

Le document WO 2008/075280 décrit une unité de traitement d'ébauches selon le préambule de la revendication 1.

Le rendement et les propriétés (notamment de précision optique) de la chauffe laser, supérieurs à ceux de la chauffe halogène, permettent de réaliser une chauffe plus rapide et plus sélective des ébauches.

Toutefois, il est nécessaire de confiner autant que possible l'enceinte au sein de laquelle défilent les ébauches, pour limiter au maximum les fuites de rayonnement, d'autant que celui-ci n'est pas visible. Ce confinement se trouve toutefois compliqué par la nécessité de ménager des ouvertures à l'entrée et à la sortie de l'enceinte pour permettre le défilement des ébauches.

Ces ouvertures sont indispensables mais représentent, en l'absence de solution de confinement, un risque d'exposition au rayonnement électromagnétique des personnels circulant autour de l'unité de traitement.

Des solutions ont été proposées pour réaliser un confinement de l'enceinte au niveau des ouvertures, cf. par exemple le brevet européen EP 2 544 877 (Sidel) ou son équivalent américain US 2013/0056649, qui propose de juxtaposer à l'enceinte un sas muni de tourniquets entraînés en rotation par le mouvement linéaire des ébauches, ces tourniquets étant pourvus de boucliers disposés en étoile conçus pour absorber le rayonnement électromagnétique issu de l'enceinte.

Cette solution donne satisfaction dans l'ensemble mais reste inadaptée à certaines conditions opératoires. En particulier, le sas à tourniquet ne convient pas à un défilement des préformes sur deux rangées, comme décrit dans la demande de brevet européen EP 2 623 439 (Sidel) ou son équivalent américain US 2013/0192956. On pourrait certes déporter le sas en amont de la zone de dédoublement de la rangée de préformes (ou en aval de la zone de regroupement des préformes sur une rangée unique), mais il en résulterait un allongement de la zone radiative, au détriment d'une bonne maîtrise du traitement (notamment thermique) des ébauches. Par ailleurs, l'énergie du rayonnement absorbé par les boucliers est perdue, ce qui réduit le rendement de la chauffe. En outre, en raison de leur mouvement rotatif, les boucliers sont soumis à des cycles de chauffe et de refroidissement successifs qui induisent une fatigue thermique de leur matériau, ce qui nécessite une maintenance régulière.

Un premier objectif est de proposer une solution de confinement d'une unité de traitement d'ébauches par rayonnement électromagnétique, qui soit à la fois simple et efficace.

Un deuxième objectif est de proposer une solution de confinement permettant d'optimiser l'utilisation du rayonnement en minimisant la part de rayonnement perdu.

Un troisième objectif est de proposer une solution de confinement permettant de minimiser les interventions de maintenance.

Un quatrième objectif est de proposer une solution de confinement présentant une bonne résistance à la fatigue thermique.

A cet effet, il est proposé une unité de traitement d'ébauches de corps creux en matière plastique, qui comprend une enceinte dans laquelle les ébauches défilent en suivant un trajet prédéterminé, cette enceinte étant délimitée de part et d'autre du trajet par deux parois latérales ayant des faces internes en regard, cette enceinte comprenant une section principale dans laquelle l'une au moins des parois est pourvue d'une pluralité de sources de rayonnement électromagnétique, les parois latérales définissant entre elles, à au moins une extrémité de l'enceinte, une ouverture pour le passage des préformes, l'enceinte comprenant au moins une section de confinement optique, qui s'étend entre la section principale et l'ouverture, et dans laquelle les faces internes des parois latérales sont optiquement réfléchissantes et convergent en direction de l'ouverture. L'unité de traitement est équipée d'un dispositif de refroidissement des parois latérales, au moins dans la section de confinement. La section de confinement optique permet de renvoyer vers la section principale au moins une partie du rayonnement qui s'en échappe. Il en résulte une augmentation du rendement de l'enceinte et une meilleure sécurité de celle-ci du point de vue des personnels environnants.

Diverses caractéristiques supplémentaires peuvent être prévues, seules ou en combinaison :

- dans la section de confinement optique, les faces internes des parois latérales sont planes ;
- dans la section de confinement optique, les faces internes des parois latérales définissent entre elles un angle compris entre 1° et 90°, de préférence entre 5° et 30°, et par exemple de 15° environ ;
- l'enceinte comprend une section d'absorption, qui s'étend entre la section de confinement optique et l'ouverture, et dans laquelle les faces internes des parois latérales sont optiquement absorbantes ;
- dans la section d'absorption, les faces internes des parois latérales sont sensiblement parallèles ;
- dans la section d'absorption, les faces internes des parois latérales sont planes ;
- le dispositif de refroidissement comprend un radiateur ;
- le radiateur comprend une rangée d'ailettes qui s'étendent verticalement sur les parois latérales à l'opposé de leurs faces internes, au moins dans la section de confinement ;
- le dispositif de refroidissement comprend un système de ventilation incluant, pour chaque radiateur, une buse de répartition qui s'étend le long d'un bord inférieur du radiateur et s'ouvre vers celui-ci, et un conduit d'amenée d'air qui découche dans la buse ;
- les sources sont des diodes laser ;
- l'unité de traitement comprend au moins un écran externe à l'enceinte, ayant une face interne optiquement absorbante positionnée en regard de l'ouverture.

D'autres objets et avantages de l'invention apparaîtront à la lumière de la description d'un mode de réalisation, faite ci-après en référence aux dessins annexés dans lesquels :

- la figure 1 est une vue en perspective d'une unité de traitement d'ébauches ;
- la figure 2 est une vue de détail, à échelle agrandie, de l'unité de traitement de la figure 1, selon l'encart II ;
- la figure 3 est une vue partielle de dessus de l'unité de traitement de la figure 1 ;
- la figure 4 est une vue partielle en coupe, à l'échelle, d'une section de confinement optique de l'unité de traitement de la figure 1 ;
- la figure 5 est une vue en perspective, en arraché partiel, montrant la section de confinement optique ;
- la figure 6 est une vue de dessus montrant une unité de traitement illustrant plusieurs modes de réalisation alternatifs.

On a représenté sur les figures une unité **1** de traitement d'ébauches **2** de corps creux en matière plastique. En l'occurrence les ébauches **2** sont des préformes destinées à former des récipients (hypothèse que l'on conserve dans ce qui suit), mais il pourrait s'agir de récipients intermédiaires ayant subi une ou plusieurs opérations de préformage (par exemple un soufflage provisoire).

Chaque préforme **2** présente un corps sensiblement cylindrique, fermé à une extrémité par un fond hémisphérique et se prolongeant à une extrémité opposée par un col.

Les préformes **2** sont représentées orientées col en haut, mais elles pourraient être orientées col en bas.

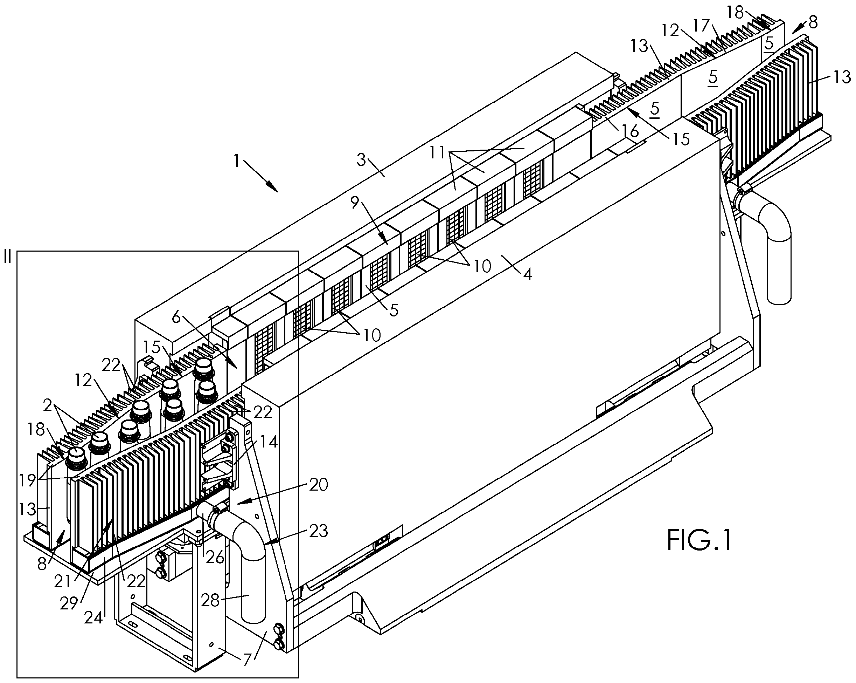

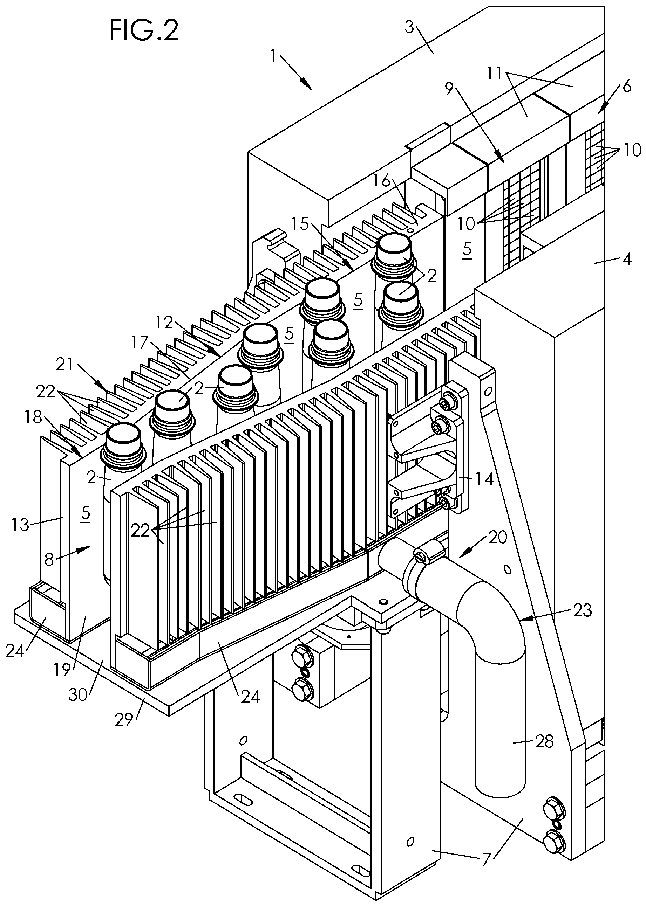

Comme cela est visible sur les figures, l'unité **1** de traitement comprend deux parois opposées, à savoir une première paroi **3** et une deuxième paroi **4**. Les parois **3, 4** présentent des faces **5** internes en regard et définissent ensemble une enceinte **6** au sein de laquelle défilent les préformes **2**. Comme on le voit sur les figures 1 et 2, l'unité **1** de traitement comprend un bâti **7** sur lequel sont montées les parois **3, 4**.

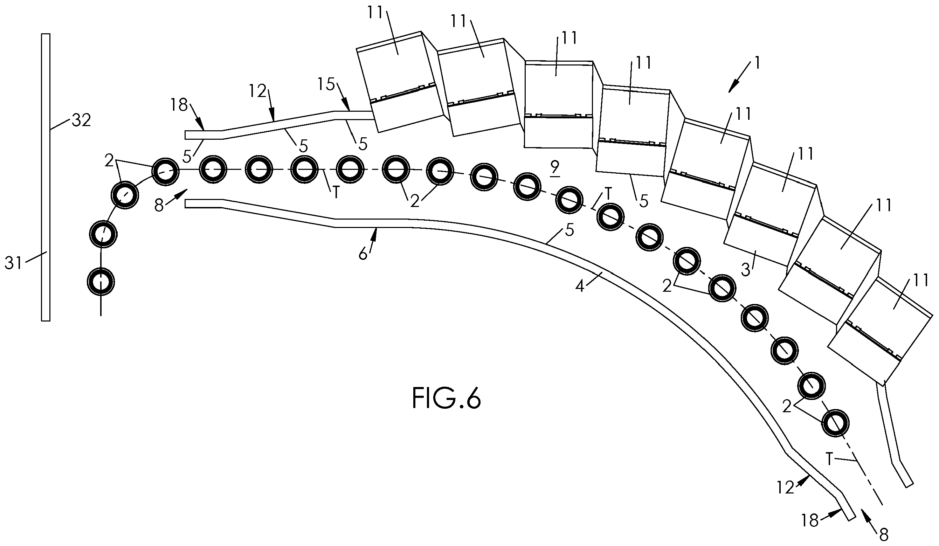

Les parois **3, 4** latérales définissent entre elles, à au moins une extrémité de l'enceinte, une ouverture **8** pour le passage des préformes **2**. En pratique, l'enceinte **6** présente (comme illustré sur les figures 1 et 6) deux extrémités opposées définissant chacune une ouverture **8** pour le passage des préformes **2**.

Chaque préforme **2** est montée par son col sur un dispositif de préhension rotatif appelé tournette, entraîné en déplacement à vitesse sensiblement constante le long du trajet.

Chaque préforme **2** est entraînée en rotation autour de son axe par la tournette sur laquelle elle est montée.

Les préformes **2** défilent dans l'enceinte **6** selon un trajet **T** prédéterminé. Dans l'exemple illustré sur les figures 1 à 5 ce trajet est globalement linéaire, mais il pourrait être (au moins localement) courbe, notamment selon la configuration des lieux dans lesquels est installée l'unité **1** de traitement. Dans l'exemple illustré sur les figures 1 et 2, les préformes **2** entrent dans l'enceinte **6** sur une rangée unique et sont dédoublées sur deux rangées parallèles en étant disposées en quinconce. Un système de transport permettant de réaliser un tel dédoublement local est décrit dans la demande EP 2 623 439, dont le contenu est ici incorporé par référence. Dans ce cas, trajet **T** est localement courbé dans la zone de dédoublement, bien qu'il soit globalement linéaire. En variante, comme illustré sur la figure 6, le trajet **T** est courbe, par exemple en arc de cercle. Comme on le voit sur cette figure, les préformes **2** peuvent par ailleurs défiler sur une rangée unique.

L'enceinte **6** comprend une section **9** principale dans laquelle l'une au moins des parois **3,** dite paroi émettrice, est tapissée du côté de sa face **5** interne d'une pluralité de sources **10** de rayonnement électromagnétique émettant de préférence de manière monochromatique ou pseudo-monochromatique, dirigées vers l'intérieur de l'enceinte **6**. Selon un mode de réalisation particulier illustré sur les figures, les deux parois **3, 4** sont émettrices.

Si le traitement des préformes **2** est un traitement thermique (que l'on peut désigner sous le terme « chauffe »), les sources **10** sont choisies pour émettre dans le domaine de l'infrarouge. Si le traitement est une décontamination, les sources **10** sont choisies pour que leur spectre couvre l'ultraviolet, domaine germicide. Il peut s'agir de lampes à vapeur de xénon à lumière puisée, ou encore de diodes émettant dans le domaine de l'ultraviolet.

En théorie, une source monochromatique est une source idéale émettant une onde sinusoïdale de fréquence unique. En d'autres termes, son spectre en fréquence est constitué d'une seule raie de largeur spectrale nulle (Dirac).

Dans la pratique, une telle source n'existe pas, une source réelle étant au mieux quasi-monochromatique, c'est-à-dire que son spectre en fréquence s'étend sur une bande de largeur spectrale faible mais non nulle, centrée sur une fréquence principale où l'intensité du rayonnement est maximale. Par abus de langage, on a toutefois coutume de qualifier une telle source réelle de monochromatique. Par ailleurs, on qualifie de « pseudo-monochromatique » une source émettant de manière quasi-monochromatique sur un spectre discret comprenant plusieurs bandes étroites centrées sur des fréquences principales distinctes. On parle également de source multimodes.

L'avantage d'un tel rayonnement est qu'il est concentré sur une (ou plusieurs) fréquence(s) pour laquelle (ou pour lesquelles) le comportement thermique du matériau des préformes **2** est particulièrement intéressant au regard du cahier des charges. A titre d'exemple, pour obtenir une chauffe rapide en surface des préformes **2,** on peut choisir une (ou plusieurs) fréquence(s) dans l'infrarouge pour laquelle (pour lesquelles) le matériau est très absorbant. A contrario, pour obtenir une chauffe plus lente mais plus homogène dans l'épaisseur des préformes **2,** on peut choisir une (ou plusieurs) fréquence(s) pour laquelle (pour lesquelles) le matériau est relativement moins absorbant.

Dans ce qui suit, on suppose que le traitement est une chauffe, l'unité **1** de traitement étant de fait une unité de chauffe (également appelée « four »). Dans cette application, chaque préforme **2,** réalisée dans une matière thermoplastique telle que polyéthylène téréphtalate (PET), est destinée, après avoir été ramollie par chauffage au sein du four **1** à une température supérieure à sa température de transition vitreuse, à subir dans un moule une opération de soufflage ou d'étirage soufflage pour former un récipient tel qu'une bouteille ou un flacon.

En pratique, les sources **10** sont des lasers (par exemple des diodes laser) émettant dans l'infrarouge et organisés par juxtaposition et superposition pour former une ou plusieurs matrices, comme cela est par exemple décrit dans la demande internationale WO 2013/076415, dont le contenu est ici incorporé par référence. En l'espèce, chaque matrice peut être une matrice de diodes laser à cavité verticale émettant par la surface (VCSEL), chaque diode émettant par exemple un faisceau laser d'une puissance unitaire de l'ordre du Watt à une longueur d'onde de d'environ 1 μm. Dans l'exemple illustré sur les figures 1, 2 et 3 et 6, le four 1 est équipé de plusieurs matrices de diodes disposées côte à côte le long de l'enceinte **6.** Ces matrices sont ici regroupées dans des modules **11** de chauffe individuels qui, dans l'exemple des figures 1, 2 et 3 sont disposés côte à côte en étant alignés et, dans l'exemple de la figure 6, sont décalés à la manière d'un escalier pour suivre le trajet **T** de défilement des préformes **2.** Les modules **11** sont solidaires du bâti **7** en y étant par exemple fixés de manière amovible (pour permettre leur maintenance), typiquement au moyen de vis.

Il est souhaitable de confiner le rayonnement électromagnétique émis par les sources **10,** car une fraction de celui-ci a tendance à s'échapper de l'enceinte **6 :** d'une part, les sources **10** émettent un rayonnement divergent (chaque diode laser VCSEL, par exemple, émet un rayonnement grossièrement inscrit dans un cône) ; d'autre part, une partie du rayonnement non absorbé par les préformes **2** subit une réfraction en raison de la forme cylindrique de celles-ci.

Un confinement du rayonnement permet, d'une part, d'améliorer le rendement optique du traitement des préformes **2** et, d'autre part, de protéger le personnel environnant.

A cet effet, l'enceinte **6** comprend au moins une section **12** de confinement optique, qui s'étend entre la section **9** principale et l'ouverture **8,** et dans laquelle les faces **5** internes des parois **3, 4** latérales sont optiquement réfléchissantes et convergent en direction de l'ouverture **8.**

Dans l'idéal, la réflexion est de type spéculaire, c'est-à-dire que tout rayon incident donne naissance, au contact de la face **5** interne, à un rayon réfléchi unique. Nous verrons ci-après que, dans la pratique, la réflexion n'est pas nécessairement en totalité spéculaire, mais qu'une partie du flux optique incident peut donner lieu à une réflexion diffuse et/ou à une absorption.

Selon un mode de réalisation illustré sur les figures 1 à 5, chaque paroi **3, 4** latérale est formée, au moins dans la section **12** de confinement, par un écran **13** rapporté.

Chaque écran **13** est fixé sur le bâti **7,** par exemple par l'intermédiaire d'une équerre **14** de fixation vissée dans celui-ci.

Chaque écran **13** est avantageusement réalisé dans un matériau apte à résister à une exposition prolongée au rayonnement électromagnétique issu de la section **9** principale de l'enceinte **6,** typiquement en acier ou dans un alliage d'aluminium.

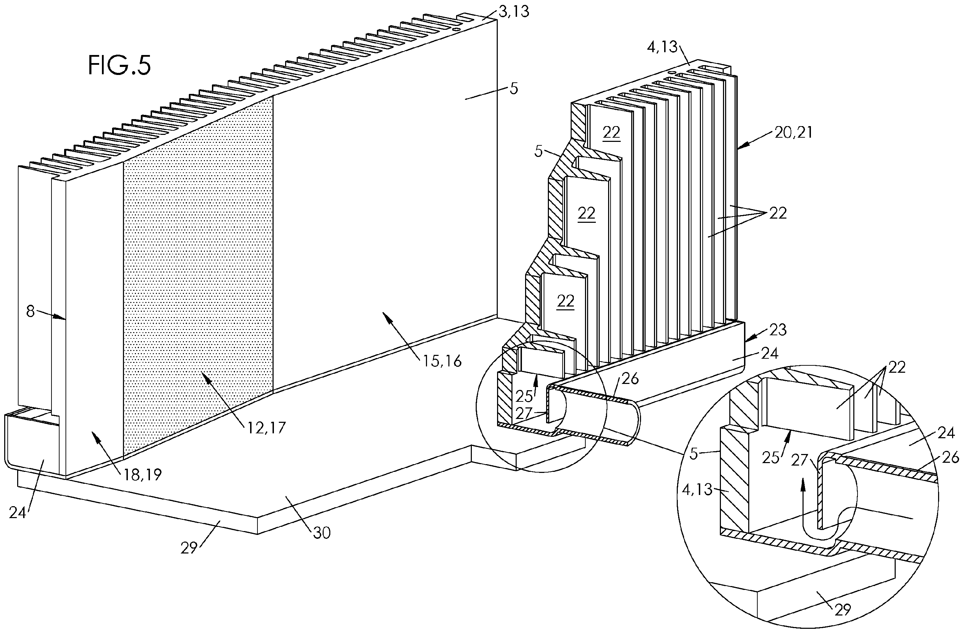

Dans la section **12** de confinement optique (en grisé sur la figure 5), les faces **5** internes des parois **3, 4** latérales sont avantageusement planes ; elles peuvent être couvertes d'un revêtement réfléchissant (par exemple sous forme d'une fine couche métallique d'or, d'argent, de platine, ou encore d'aluminium). En variante, les faces **5** internes des parois **3, 4** latérales métalliques sont, dans la section **12** de confinement optique, simplement polies.

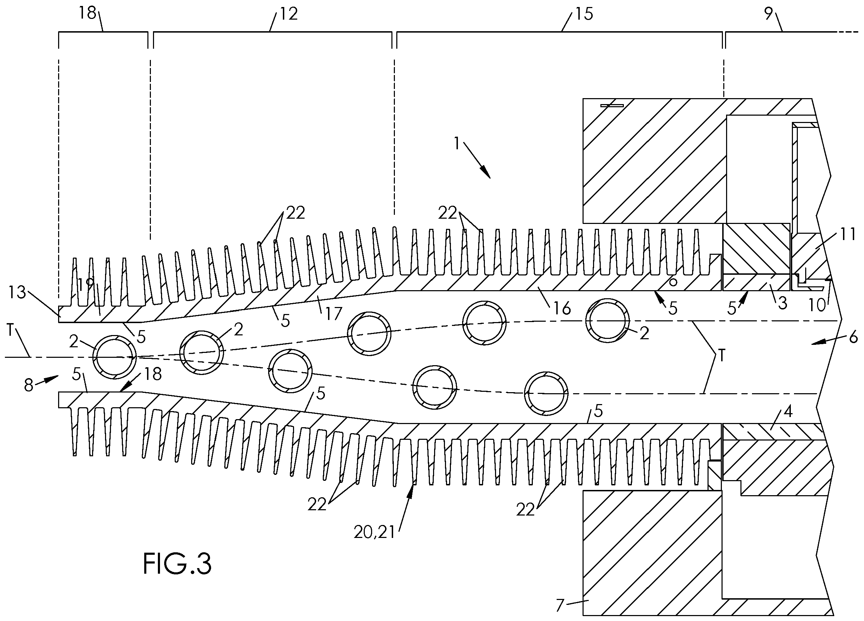

Selon un mode de réalisation illustré sur la figure 3, l'unité 1 de traitement comprend une section **15** d'atténuation, intercalée entre la section **9** principale et la section **12** de confinement, et dans laquelle les faces **5** internes des parois **3, 4** latérales sont toutes deux réfléchissantes et s'étendent parallèlement au trajet **T** des préformes **2**. Dans l'exemple illustré sur la figure 3, où le trajet **T** est globalement linéaire, les faces **5** internes des parois latérales sont planes et parallèles.

La section **15** d'atténuation a pour fonction de canaliser vers les préformes **2** entrant dans (ou sortant de) la section **9** principale la fraction du rayonnement s'échappant de celle-ci. Comme on le voit sur la figure 3, les parois **3, 4** latérales peuvent, dans la section **15** d'atténuation, être formées par une portion **16** interne des écrans **13**, située du côté de la section **9** principale de l'enceinte **6**.

De même, les parois **3, 4** latérales peuvent, dans la section **12** de confinement, être formées par une portion **17** intermédiaire des écrans **13**, inclinée par rapport à la portion **16** interne.

La section **12** de confinement a une double fonction :

- réfléchir vers les préformes **2** circulant dans la section **12** de confinement le rayonnement résiduel qui, en provenance de la section **9** principale, n'a pas été absorbé (que ce soit dans la section **9** principale ou, le cas échéant, dans la section **15** d'atténuation) par les préformes **2** ;
- rediriger vers la section **9** principale la fraction de rayonnement non absorbée.

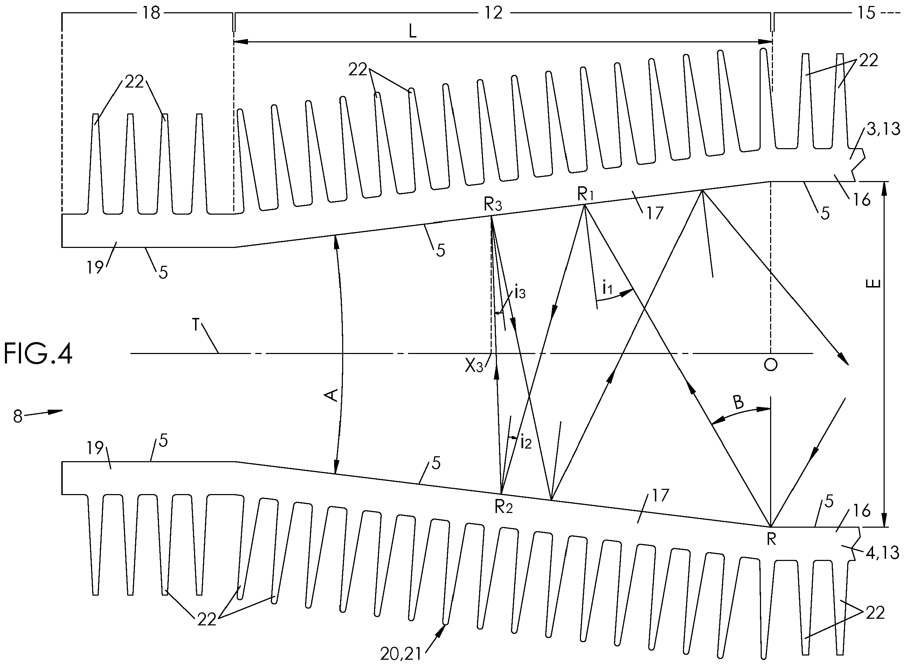

On note (cf. figure 4) :

L la longueur de la section **12** de confinement, mesurée le long du trajet **T**,
**A** l'angle entre les faces **5** internes des parois **3, 4** latérales dans la section **12** de confinement,
**E** l'écartement entre les parois **3, 4** latérales dans la section **9** principale, mesuré perpendiculairement à la tangente au trajet **T** (et perpendiculairement à celui-ci lorsqu'il est rectiligne, comme dans l'exemple illustré sur la figure 3).

La section **15** d'atténuation s'étendant de manière coplanaire à la section **9** principale, E correspond également à l'écartement des parois **3, 4** latérales dans la section **15** d'atténuation.

L'angle **A** est avantageusement compris entre 1° et 90°, et de préférence entre 5° et 30°. Dans l'exemple illustré, les paramètres **L, A** et **E** ont les valeurs approximatives suivantes : **L** ≅ 155 mm ; **A** ≅ 15° ; **E** ≅ 100 mm.

Pour mieux illustrer le fonctionnement de la section **12** de confinement, on a illustré sur la figure 4 le trajet d'un rayon incident provenant de la section **9** principale (après avoir éventuellement subi des réflexions successives dans la section **15** d'atténuation) et entrant dans la section **12** de confinement. On se place dans l'hypothèse (défavorable et transitoire) où les préformes **2** sont absentes, ce qui correspond en pratique à la mise en route (ou préchauffage) de l'unité **1** de traitement, et dans l'hypothèse (également défavorable) où le rayon incident entre dans la section **12** de confinement à partir d'un point **R** de réflexion situé sur un bord interne de celle-ci, du côté de la section **9** principale (ou de la section **15** d'atténuation).

Le rayon incident est incliné, par rapport aux faces **5** internes des parois **3, 4** dans la section **9** principale (ou dans la section **15** d'atténuation) d'un angle noté **B,** dit angle d'origine. En l'absence de préformes, l'angle **B** d'origine correspond au demi-angle au sommet (mesuré dans un plan horizontal) du cône lumineux émis par chaque source **10,** en les supposant toutes identiques.

Le rayon incident est réfléchi successivement par les faces **5** internes des parois **3, 4** dans la section **12** de confinement. On note **R$_N$** les points de réflexion successifs sur chaque face interne, et **i$_N$** les angles d'incidence correspondants, où N est un entier supérieur ou égal à **1.**

Compte tenu des règles de l'optique géométrique, chaque angle **i$_N$** d'incidence s'écrit de la manière suivante :

$$i_N = B - (2N-1)\frac{A}{2}$$

On comprend aisément que, au point **R$_N$** correspondant à un angle d'incidence **i$_N$** nul ou négatif, le rayon est réfléchi en direction de la section **9** principale.

Ainsi, pour un angle **A** de 15° (ce qui correspond à l'exemple fourni ci-dessus), et pour un angle **B** d'origine de 30°, on observe que le rayon subit trois réflexions en direction de l'ouverture **8,** successivement en **R$_1$, R$_2$** et **R$_3$,** avant d'être renvoyé, à partir de **R$_3$,** vers la section **9** principale. Les tracés de la figure 4 illustrent cette configuration.

La longueur L de la section **12** de confinement est de préférence choisie pour que tout rayon incident soit effectivement renvoyé vers la section **9** principale avant de dépasser la section **12** de confinement.

On peut employer efficacement l'optique géométrique pour dimensionner en ce sens la section **12** de confinement. Néanmoins, il est également possible de dimensionner la section 12 de confinement par calcul, en notant **X$_N$** l'abscisse, mesurée le long du trajet T, du point **R$_N$** à partir duquel le rayon est renvoyé vers la section 9 principale, en prenant pour origine, notée O, l'extrémité interne (du côté de la section 9 principale ou de la section 15 d'atténuation) de la section 12 de confinement.

**X$_N$** peut être calculée approximativement par la formule suivante :

$$X_N = \sum_{i=0}^{N-1} E_i \cdot tan(B - i \cdot A)$$

où $E_i$ se définit de la manière suivante :

$$E_0 = E$$

$$E_{i+1} = E_i \cdot \left(1 - 2 \cdot tan(B - iA) \cdot tan\frac{A}{2}\right)$$

Pour des valeurs de **A, B** et **L** respectivement de 15°, 30° et 100 mm, un tracé géométrique permet de mesurer directement l'abscisse $\mathbf{X_3}$ : celle-ci est égale à 80 mm environ. La méthode de calcul décrite ci-dessus fournit une valeur sensiblement identique.

On voit dès lors, dans ce cas, qu'une longueur **L** de 155 mm est suffisante. Les calculs ci-dessus permettent de démontrer qu'à angle **A** égal, une telle longueur **L** est suffisante pour renvoyer vers la section **9** principale, en théorie, tout rayon dont l'angle **B** d'origine est inférieur ou égal à 45° environ.

Dans la pratique, il peut cependant arriver qu'une fraction du rayonnement issu de la section **9** principale ne lui soit pas renvoyée par la section **12** de confinement.

Premièrement, il se peut que certains rayons soient diffractés par une ou plusieurs préformes **2** (notamment à proximité de leur face externe) au point que l'angle d'incidence du rayon diffracté soit tel que ce rayon ne frappe pas l'une des faces 5 internes dans la section **12** de confinement.

Deuxièmement, comme nous l'avons vu, la réflexion du flux lumineux incident (en provenance de la section **9** principale) n'est pas nécessairement en totalité spéculaire. Certes, il est possible de rendre la rugosité des faces **5** internes des parois **3, 4** latérales dans la section **12** de confinement inférieure à la longueur d'onde du flux lumineux. En effet, dans l'infrarouge, cette longueur d'onde est supérieure ou égale à 800 nm. Or, les techniques modernes de polissage ou de dépôt (par exemple par pulvérisation cathodique ou sputtering) permettent d'obtenir des rugosités inférieures, voire très inférieures à cette valeur. Mais des poussières peuvent cependant se déposer sur les faces 5 internes, et par conséquent conduire, au moins localement, à une réflexion diffuse partielle ou totale du flux lumineux incident.

Pour limiter les risques que le flux lumineux non réfléchi de manière spéculaire par la section **12** de confinement ne puisse librement s'échapper par l'ouverture **8,** il est par conséquent préférable d'équiper l'enceinte **6** d'une section **18** d'absorption, qui s'étend entre la section **12** de confinement optique et l'ouverture **8,** et dans laquelle les faces **5** internes des parois **3, 4** latérales sont optiquement absorbantes.

Selon un mode de réalisation illustré sur les figures, et en particulier sur les figures 3 et 4, dans la section **18** d'absorption les faces 5 internes des parois **3, 4** latérales sont sensiblement parallèles, tout en étant avantageusement planes. Dans la section d'absorption, le caractère optiquement absorbant des faces **5** internes peut être procuré par un revêtement, tel qu'une peinture noire. En variante, dans la section **18** d'absorption, les faces **5** internes peuvent être inclinées, par exemple dans le prolongement de la section **12** de confinement.

La section **18** d'absorption a pour fonction d'absorber au moins partiellement l'éventuelle partie du rayonnement qui n'aurait pas été renvoyée par la section **12** de confinement vers la section **9** principale, en raison d'un angle d'incidence trop important dû par exemple à une réfraction sur le pourtour d'une ou plusieurs préformes **2,** ou en raison d'une réflexion diffuse sur les faces **5** internes de la section **12** de confinement.

La section **18** d'absorption peut être formée d'un seul tenant avec la section **12** de confinement. Ainsi, dans l'exemple illustré sur les figures, les parois **3, 4** latérales sont, dans la section **18** d'absorption, formées par une portion **19** externe des écrans **13,** qui prolonge la portion **17** intermédiaire à l'opposé de la section **9** principale, jusqu'à l'ouverture **8.**

Comme nous l'avons déjà expliqué, la réflexion procurée par les faces **5** internes des parois **3, 4** latérales (dans la section **12** de confinement comme dans la section **15** d'atténuation) n'est pas nécessairement spéculaire à 100%. Une partie du flux lumineux peut être diffusé. Une partie du flux lumineux peut également être absorbé par les parois **3, 4** latérales. Il en résulte un échauffement de celles-ci, susceptible de provoquer une déformation des faces **5** internes, au détriment de la qualité de la réflexion.

Il peut donc être avantageux de réguler la température des parois **3, 4** latérales, au moins dans la section **12** de confinement et, le cas échéant, dans la section **15** d'atténuation.

A cet effet, l'unité **1** de traitement peut être équipée d'un dispositif **20** de refroidissement des parois **3, 4** latérales, au moins dans la section **12** de confinement, et par exemple également dans la section **15** d'atténuation ainsi qu'éventuellement dans la section **18** d'absorption.

Ce dispositif **20** de refroidissement comprend par exemple un radiateur **21,** destiné à dissiper les calories absorbées par les parois **3, 4** latérales. Ce radiateur **21** peut être à circulation de fluide frigorigène (par exemple à eau). Cependant, dans l'exemple illustré, le radiateur **21** est à circulation d'air.

Ainsi, ce radiateur **21** comprend par exemple une rangée d'ailettes **22** qui s'étendent verticalement sur les parois **3, 4** latérales à l'opposé de leurs faces **5** internes, au moins dans la section **12** de confinement - et, dans l'exemple illustré, également dans la section **15** d'atténuation. Selon un mode de réalisation non illustré, des ailettes **22** sont également prévues sur les parois **3, 4** dans la section **18** d'absorption.

Le refroidissement peut être réalisé par convection naturelle, les mouvements ascendants d'air entre les ailettes **22** emportant tout ou partie des calories produites. Cependant, il est préférable, pour des raisons d'efficacité, de réaliser le refroidissement par convection forcée, qui procure un transfert calorique vers l'air ambiant plus rapide et permet donc un refroidissement plus efficace des parois latérales **3, 4.**

Ainsi, selon un mode de réalisation illustré sur les figures, et plus particulièrement visible sur l'arraché de la figure 5, le dispositif **20** de refroidissement comprend un système **23** de ventilation.

Ce système **23** comprend, pour chaque radiateur **21,** d'une part, une buse **24** de répartition qui s'étend le long d'un bord **25** inférieur du radiateur **21** et s'ouvre vers celui-ci (c'est-à-dire vers le haut), et, d'autre part, un conduit **26** d'amenée d'air qui débouche dans la buse **24.**

Comme illustré sur la figure 5, et plus particulièrement dans son médaillon de détail, la buse **24** peut comprendre une cloison **27** interne en regard de laquelle débouche le conduit **26,** ce conduit formant un déflecteur qui permet, d'une part, de répartir le flux d'air le long du bord **25** inférieur du radiateur **21,** et d'autre part de dévier ce flux (comme illustré par la flèche) de sorte à le rendre laminaire pour optimiser l'efficacité du refroidissement.

Le conduit **26** d'amenée d'air peut être solidaire de la buse **24.** Comme dans l'exemple illustré, ce conduit **26** peut se présenter sous forme d'un raccord sur lequel est branchée une tubulure **28** (flexible ou rigide), qui n'est que partiellement représentée sur la figure 2, et qui est raccordée par ailleurs à une source d'air frais pulsé.

Comme on le voit bien sur les figures 2 et 5, l'unité **1** de traitement peut être équipée d'une paroi **29** de fond qui s'étend horizontalement en fermant les parois **3, 4** latérales au moins dans la section **12** de confinement (et de préférence également dans la section **15** d'atténuation et dans la section **18** d'absorption).

Cette paroi **29** de fond présente une face **30** supérieure qui peut être optiquement absorbante (en étant par exemple revêtue d'une peinture noire) ou de préférence réfléchissante (en étant par exemple revêtue d'un revêtement optiquement réfléchissant tel qu'une couche d'or, d'argent, ou encore d'aluminium - en variante la face **30** supérieure est polie, la paroi **29** de fond étant réalisée dans un matériau métallique, par exemple en aluminium).

La paroi **29** de fond permet d'absorber ou de réfléchir vers les préformes **2** la fraction du rayonnement émise (ou réfractée par les préformes **2**) vers le bas. Dans le premier cas, la fonction réalisée est seulement sécuritaire, pour protéger les personnels environnants. Dans le deuxième cas, s'ajoute en outre à cette fonction sécuritaire une augmentation du rendement de l'unité **1** de traitement par réémission vers les préformes **2** d'une fraction du rayonnement qui pourrait être perdue.

L'unité **1** de traitement qui vient d'être décrite procure les avantages suivants.

D'abord, grâce à sa section de confinement, l'unité **1** de traitement permet, de manière simple et efficace, d'améliorer la sécurité des personnels et d'augmenter le rendement de la chauffe.

Ensuite, la section **12** de confinement assurant une réflexion du flux lumineux incident vers les préformes **2,** la part de rayonnement perdu est minimisée, ce qui permet d'optimiser l'utilisation du rayonnement émis par les sources **10.**

En outre, la section **12** de confinement n'ayant aucune pièce mobile, aucune usure mécanique n'est à déplorer, ce qui permet de minimiser les interventions de maintenance.

Enfin, grâce en particulier à un bon état de surface des faces **5** internes des parois **3, 4** latérales au moins dans la section **12** de confinement, et à l'absence de cycles thermiques en régime permanent, l'unité **1** de traitement présente une bonne résistance à la fatigue thermique.

Diverses variantes de réalisation peuvent être prévues. Par commodité, on a rassemblé ces variantes sur la figure 6.

Ainsi, suivant une première variante, et comme cela est évoqué ci-dessus, le trajet **T** des préformes **2** dans l'enceinte est courbe et non linéaire. Dans l'exemple illustré, le trajet **T** forme localement, dans la section **9** principale, un arc de cercle.

Selon une deuxième variante, l'une au moins des parois **3, 4** ne présente pas, dans la section **9** principale, une face **5** interne continue : cette face **5** interne peut être en escalier en suivant le trajet **T** courbe des préformes **2.** A cet effet, comme illustré, les modules **11** individuels de chauffe peuvent être décalés les uns par rapport aux autres.

Selon une troisième variante, seule une paroi **3** est, dans la section **9** principale, pourvue de sources **10** de rayonnement, l'autre paroi **4** étant simplement réfléchissante.

Selon une quatrième variante, l'unité **1** de traitement comprend au moins un écran **31** externe à l'enceinte **6,** cet écran **31** ayant une face **32** interne optiquement absorbante positionnée en regard de l'ouverture **8.** Cette disposition est réalisable lorsque le trajet **T** des préformes en amont (ou en aval) de l'ouverture **8** subit au moins localement une déviation, l'écran **31** externe étant placé dans le prolongement du trajet **T** suivi par les préformes dans la section **12** de confinement. Cet écran **32** externe permet d'absorber la fraction du rayonnement non réfléchi vers la section **9** principale par la section **12** de confinement et non absorbée par la section **18** d'absorption. Il en résulte une meilleure sécurité de l'unité **1** de traitement pour les personnels environnants.

## Revendications

1. Unité (**1**) de traitement d'ébauches (**2**) de corps creux en matière plastique, qui comprend une enceinte (**6**) dans laquelle les ébauches (**2**) défilent en suivant un trajet (**T**) prédéterminé, cette enceinte (**6**) étant délimitée de part et d'autre du trajet (**T**) par deux parois (**3, 4**) latérales ayant des faces (**5**) internes en regard, cette enceinte (**6**) comprenant une section (**9**) principale dans laquelle l'une au moins des parois (**3, 4**) est pourvue d'une pluralité de sources (**10**) de rayonnement électromagnétique, les parois (**3, 4**) latérales définissant entre elles, à au moins une extrémité de l'enceinte, une ouverture (**8**) pour le passage des ébauches (**2**), cette enceinte (**6**) comprenant en outre au moins une section (**12**) de confinement optique, qui s'étend entre la section (**9**) principale et l'ouverture (**8**), et dans laquelle les faces (**5**) internes des parois (**3, 4**) latérales sont optiquement réfléchissantes et convergent en direction de l'ouverture (**8**),
   cette unité (**1**) de traitement étant équipée d'un dispositif (**20**) de refroidissement **caractérisée en ce que** ledit dispositif de refroidissement est un dispositif de refroidissement des parois (**3, 4**) latérales, au moins dans la section (**12**) de confinement.

2. Unité (**1**) de traitement selon la revendication 1, **caractérisée en ce que**, dans la section (**12**) de confinement optique, les faces (**5**) internes des parois (**3, 4**) latérales sont planes.

3. Unité (**1**) de traitement selon la revendication 2, **caractérisée en ce que**, dans la section (**12**) de confinement optique, les faces (**5**) internes des parois (**3, 4**) latérales définissent entre elles un angle (**A**) compris entre 1 ° et 90°.

4. Unité (**1**) de traitement selon la revendication 3, **caractérisée en ce que**, dans la section (**12**) de confinement optique, les faces (**5**) internes des parois (**3, 4**) latérales définissent entre elles un angle (**A**) compris entre 5° et 30°.

5. Unité (**1**) de traitement selon la revendication 4, **caractérisée en ce que**, dans la section (**12**) de confinement optique, les faces (**5**) internes des parois (**3, 4**) latérales définissent entre elles un angle (**A**) de 15° environ.

6. Unité (**1**) de traitement selon l'une des revendications précédentes, **caractérisée en ce que**, dans la section (**18**) d'absorption, les faces (**5**) internes des parois (**3, 4**) latérales sont sensiblement parallèles.

7. Unité (**1**) de traitement selon l'une des revendications précédentes, **caractérisé en ce que**, dans la section (**18**) d'absorption, les faces (**5**) internes des parois (**3, 4**) latérales sont planes.

8. Unité (**1**) de traitement selon l'une des revendications précédentes, **caractérisée en ce que** l'enceinte (**6**) comprend une section (**18**) d'absorption, qui s'étend entre la section (**12**) de confinement optique et l'ouverture (**8**), et dans laquelle les faces (**5**) internes des parois (**3, 4**) latérales sont optiquement absorbantes.

9. Unité (**1**) de traitement selon la revendication 8, **caractérisée en ce que** le dispositif (**20**) de refroidissement comprend un radiateur (**21**).

10. Unité (**1**) de traitement selon la revendication 9, **caractérisée en ce que** le radiateur (**21**) comprend une rangée d'ailettes (**22**) qui s'étendent verticalement sur les parois (**3, 4**) latérales à l'opposé de leurs faces (**5**) internes, au moins dans la section de (**12**) confinement.

11. Unité (**1**) de traitement selon la revendication 9 ou 10, **caractérisée en ce que** le dispositif (**20**) de refroidissement comprend un système (**23**) de ventilation incluant, pour chaque radiateur (**21**), une buse (**24**) de répartition qui s'étend le long d'un bord (**25**) inférieur du radiateur (**21**) et s'ouvre vers celui-ci, et un conduit (**26**) d'amenée d'air qui découche dans la buse (**24**).

12. Unité (**1**) de traitement selon l'une des revendications précédentes, **caractérisée en ce que** les sources (**10**) sont des diodes laser.

13. Unité (**1**) de traitement selon l'une des revendications précédentes, **caractérisée en ce qu'**elle comprend au moins un écran (**31**) externe à l'enceinte (**6**), ayant une face (**32**) interne optiquement absorbante positionnée en regard de l'ouverture (**8**).

## Patentansprüche

1. Einheit (1) zur Behandlung von Vorformlingen (2) von Hohlkörpern aus Kunststoff, welche einen Raum (6) umfasst, in welchem die Vorformlinge (2), einem vorbestimmten Weg (T) folgend, durchlaufen, wobei dieser Raum (6) beiderseits des Weges (T) von zwei seitlichen Wänden (3, 4) begrenzt wird, die einander gegenüberliegende Innenflächen (5) aufweisen, wobei dieser Raum (6) einen Hauptabschnitt (9) umfasst, in welchem wenigstens eine der Wände (3, 4) mit mehreren Quellen (10) elektromagnetischer Strahlung versehen ist, wobei die seitlichen Wände (3, 4) an wenigstens einem Ende des Raumes zwischen sich eine Öffnung (8) für die Hindurchbewegung der Vorformlinge (2) definieren, wobei dieser Raum (6) außerdem wenigstens einen optischen Begrenzungsabschnitt (12) umfasst, welcher sich zwischen dem Hauptabschnitt (9) und der Öffnung (8) erstreckt und in welchem die Innenflächen (5) der seitlichen Wände (3, 4) optisch reflektierend sind und in Richtung der Öffnung (8) zusammenlaufen, wobei diese Einheit (1) zur Behandlung wenigstens in dem Begrenzungsabschnitt (12) mit einer Vorrichtung (20) zur Kühlung ausgestattet ist, **dadurch gekennzeichnet, dass** die Vorrichtung zur Kühlung eine Vorrichtung zur Kühlung der seitlichen Wände (3, 4) ist.

2. Einheit (1) zur Behandlung nach Anspruch 1, **dadurch gekennzeichnet, dass** in dem optischen Begrenzungsabschnitt (12) die Innenflächen (5) der seitlichen Wände (3, 4) eben sind.

3. Einheit (1) zur Behandlung nach Anspruch 2, **dadurch gekennzeichnet, dass** in dem optischen Begrenzungsabschnitt (12) die Innenflächen (5) der seitlichen Wände (3, 4) zwischen sich einen Winkel (A) definieren, der zwischen 1° und 90° liegt.

4. Einheit (1) zur Behandlung nach Anspruch 3, **dadurch gekennzeichnet, dass** in dem optischen Begrenzungsabschnitt (12) die Innenflächen (5) der seitlichen Wände (3, 4) zwischen sich einen Winkel (A) definieren, der zwischen 5° und 30° liegt.

5. Einheit (1) zur Behandlung nach Anspruch 4, **dadurch gekennzeichnet, dass** in dem optischen Begrenzungsabschnitt (12) die Innenflächen (5) der seitlichen Wände (3, 4) zwischen sich einen Winkel (A) von ungefähr 15° definieren.

6. Einheit (1) zur Behandlung nach einem der vorhergehenden Ansprüche, **dadurch gekennzeichnet, dass** in dem Absorptionsabschnitt (18) die Innenflächen (5) der seitlichen Wände (3, 4) im Wesentlichen parallel sind.

7. Einheit (1) zur Behandlung nach einem der vorhergehenden Ansprüche, **dadurch gekennzeichnet, dass** in dem Absorptionsabschnitt (18) die Innenflächen (5) der seitlichen Wände (3, 4) eben sind.

8. Einheit (1) zur Behandlung nach einem der vorhergehenden Ansprüche, **dadurch gekennzeichnet, dass** der Raum (6) einen Absorptionsabschnitt (18) umfasst, welcher sich zwischen dem optischen Begrenzungsabschnitt (12) und der Öffnung (8) erstreckt und in welchem die Innenflächen (5) der seitlichen Wände (3, 4) optisch absorbierend sind.

9. Einheit (1) zur Behandlung nach Anspruch 8, **dadurch gekennzeichnet, dass** die Vorrichtung (20) zur Kühlung einen Kühlkörper (21) umfasst.

10. Einheit (1) zur Behandlung nach Anspruch 9, **dadurch gekennzeichnet, dass** der Kühlkörper (21) wenigstens in dem Begrenzungsabschnitt (12) eine Reihe von Rippen (22) umfasst, die sich vertikal an den seitlichen Wänden (3, 4) gegenüber von deren Innenflächen (5) erstrecken.

11. Einheit (1) zur Behandlung nach Anspruch 9 oder 10, **dadurch gekennzeichnet, dass** die Vorrichtung (20) zur Kühlung ein Belüftungssystem (23) umfasst, welches für jeden Kühlkörper (21) eine Verteilungsdüse (24), die sich entlang eines unteren Randes (25) des Kühlkörpers (21) erstreckt und sich zu diesem hin öffnet, und eine Luftzuführungsleitung (26), welche in die Düse (24) mündet, beinhaltet.

12. Einheit (1) zur Behandlung nach einem der vorhergehenden Ansprüche, **dadurch gekennzeichnet, dass** die Quellen (10) Laserdioden sind.

13. Einheit (1) zur Behandlung nach einem der vorhergehenden Ansprüche, **dadurch gekennzeichnet, dass** sie wenigstens einen außerhalb des Raumes (6) befindlichen Schirm (31) umfasst, der eine optisch absorbierende Innenfläche (32) aufweist, die gegenüber der Öffnung (8) positioniert ist.

## Claims

1. Unit (1) for processing blanks (2) of hollow bodies made of plastic material, which comprises a chamber (6) in which the blanks (2) file along a predetermined path (T), this chamber (6) being delimited on either side of the path (T) by two side walls (3, 4) having internal faces (5) facing one another, this chamber (6) comprising a main section (9) in which at least one of the walls (3, **4**) is provided with a plurality of sources (**10**) of electromagnetic radiation, the side walls (**3, 4**) defining between them, at at least one end of the chamber, an opening (**8**) for the passage of the blanks (**2**), this chamber (**6**) also comprising at least one optical containment section (**12**), which extends between the main section (**9**) and the opening (**8**), and in which the internal faces (**5**) of the side walls (**3, 4**) are optically reflecting and converge towards the opening (**8**),
this processing unit (**1**) being equipped with a cooling device (**20**), **characterized in that** said cooling device is a device for cooling the side walls (**3, 4**), at least in the containment section (**12**).

2. Processing unit (**1**) according to Claim 1, **characterized in that**, in the optical containment section (**12**), the internal faces (**5**) of the side walls (**3, 4**) are flat.

3. Processing unit (**1**) according to Claim 2, **characterized in that**, in the optical containment section (**12**),

the internal faces (**5**) of the side walls (**3, 4**) define between them an angle (**A**) of between 1° and 90°.

4. Processing unit (**1**) according to Claim 3, **characterized in that**, in the optical containment section (**12**), the internal faces (**5**) of the side walls (**3, 4**) define between them an angle (**A**) of between 5° and 30°.

5. Processing unit (**1**) according to Claim 4, **characterized in that**, in the optical containment section (**12**), the internal faces (**5**) of the side walls (**3, 4**) define between them an angle (**A**) of approximately 15°.

6. Processing unit (**1**) according to one of the preceding claims, **characterized in that**, in the absorption section (**18**), the internal faces (**5**) of the side walls (**3, 4**) are substantially parallel.

7. Processing unit (**1**) according to one of the preceding claims, **characterized in that**, in the absorption section (**18**), the internal faces (**5**) of the side walls (**3, 4**) are flat.

8. Processing unit (**1**) according to one of the preceding claims, **characterized in that** the chamber (**6**) comprises an absorption section (**18**), which extends between the optical containment section (**12**) and the opening (**8**), and in which the internal faces (**5**) of the side walls (**3, 4**) are optically absorbent.

9. Processing unit (**1**) according to Claim 8, **characterized in that** the cooling device (**20**) comprises a radiator (**21**).

10. Processing unit (**1**) according to Claim 9, **characterized in that** the radiator (**21**) comprises a row of fins (**22**) which extend vertically on the side walls (**3, 4**) opposite their internal faces (**5**), at least in the containment section (**12**).

11. Processing unit (**1**) according to Claim 9 or 10, **characterized in that** the cooling device (**20**) comprises a ventilation system (**23**) including, for each radiator (**21**), a distribution nozzle (**24**) which extends along a bottom edge (**25**) of the radiator (**21**) and opens towards the latter, and an air intake duct (**26**) which emerges in the nozzle (**24**).

12. Processing unit (**1**) according to one of the preceding claims, **characterized in that** the sources (**10**) are laser diodes.

13. Processing unit (**1**) according to one of the preceding claims, **characterized in that** it comprises at least one screen (**31**) external to the chamber (**6**), having an optically absorbent internal face (**32**) positioned facing the opening (**8**).

FIG.1

EP 3 363 615 B1

# FIG.2

FIG.3

FIG.4

EP 3 363 615 B1

FIG.5

3,13
5
4,13
20,21
22
5
22
22
22
8
15,16
23
24
26
25
27
12,17
18,19
24
5
22
29
30
24
26
4,13
25
27
29

EP 3 363 615 B1

FIG.6

## RÉFÉRENCES CITÉES DANS LA DESCRIPTION

**Documents brevets cités dans la description**

- FR 2878185
- FR 2915418
- WO 2008075280 A
- EP 2544877 A, Sidel
- US 20130056649 A
- EP 2623439 A, Sidel
- US 20130192956 A
- WO 2013076415 A